# DEMANDE DE BREVET EUROPEEN

(11) **EP 2 608 028 A1**
(43) Date de publication de la demande: **26.06.2013**
(21) Numéro de dépôt: 12198769.7
(22) Date de dépôt: 20.12.2012
(51) Int. Cl.: G06F 9/48, H04B 1/00

(54) **Sous-système radio d'émission/réception de radio logicielle à utilisation secondaire opportuniste**

(30) Priorité: 22.12.2011 FR 1104033
(71) Demandeur: Thales, 92200 Neuilly Sur Seine (FR)
(72) Inventeur: Nicollet, Eric, 92704 Colombes Cedex (FR); Lafaye, Frédéric, 92704 Colombes Cedex (FR); Sanchez, Alejandro, 92704 Colombes Cedex (FR); Pothin, Stéphane, 92704 Colombes Cedex (FR)
(74) Mandataire: Domenego, Bertrand

(57) **Abrégé**

L'invention concerne un sous-système radio d'émission/réception (12) de radio logicielle faisant partie d'un équipement radio logicielle (10), comportant une chaîne de traitement radio (18), réalisant pour l'émission la transformation d'un signal numérisé issu d'une application radio logicielle en un signal électromagnétique apte à être véhiculé par média radio, et réciproquement, pour la réception, la transformation d'un signal électromagnétique issu du média radio en un signal numérisé apte à être traité par une application radio logicielle, et un module de contrôle logiciel (22) apte à piloter ladite chaîne de traitement radio (18) en respect strict de requêtes primaires de contrôle (RP) en provenance d'une application radio logicielle dite application radio logicielle primaire (14). Le sous-système radio (12) d'émission/réception de radio logicielle est apte à traiter des requêtes secondaires en provenance d'au moins une autre application radio logicielle (16) dite application radio logicielle secondaire, indépendante de l'application radio logicielle primaire (14).

## Description

La présente invention concerne un sous-système radio d'émission/réception de radio logicielle à utilisation secondaire opportuniste, faisant partie d'un équipement radio.

D'une manière générale, l'invention se situe dans le domaine des radiocommunications. L'émergence récente de la radio logicielle, connue sous l'acronyme SDR pour « Software Defined Radio » en anglais, voit un nombre croissant d'applications dans le domaine des radiocommunications.

Un équipement radio logicielle comporte notamment un sous-système radio d'émission/réception assurant l'émission et/ou la réception d'un signal électromagnétique communément appelé « transceiver SDR » selon la terminologie anglo-saxonne. Le sous-système radio est capable de fonctionner dans le sens d'une émission sur le média radio, d'une réception à partir du média radio, ou, le plus souvent, des deux, soit alternativement (half-duplex) soit simultanément (full duplex).

Selon l'état de la technique, un tel sous-système radio se caractérise par ce qu'il présente nécessairement une interface logicielle d'échange de messages ou requêtes de contrôle et de données avec l'application radio logicielle qui s'en sert.

Le signal utile échangé entre le sous-système radio d'émission/réception et l'application radio logicielle est un signal numérique, typiquement numérisé en représentation complexe en bande de base.

Le sous-système radio d'émission/réception comporte un étage de traitements analogiques, interfacés avec le milieu de propagation radio, et un étage de traitements numériques, interfacés avec l'application radio logicielle, séparés par un étage de conversion numérique/analogique et/ou analogique/numérique.

La chaîne de traitement de signal réalisant la transformation entre le signal en entrée et le signal en sortie ne peut opérer, à un instant donné, que pour les besoins d'une et une seule application radio logicielle. Une telle chaîne de traitement de signal est typiquement composée de filtrages analogiques et/ou numériques, de décimations et/ou d'interpolations numériques, de transpositions de fréquence, de filtrages de Hilbert, etc., se répartit entre l'étage de traitements numériques et l'étage de traitements analogiques selon des choix propres à chaque architecture d'implémentation.

En plus de la partie numérique de la chaîne de traitement proprement, la partie numérique du sous-système radio d'émission/réception de radio logicielle comprend les moyens logiciels nécessaires à l'interaction avec l'application radio logicielle utilisant le sous-système radio d'émission/réception.

Le précédent exposé résume les caractéristiques d'un sous-système radio d'émission/réception dans le cas typique où le sous-système radio n'est utilisé que par une seule application radio logicielle.

L'invention s'inscrit dans le cas d'équipements radio où plusieurs applications radio logicielles utilisent simultanément un même sous-système radio d'émission/réception. Par exemple, lorsqu'une application classique de radiocommunications est exécutée simultanément à une application radio d'analyse du spectre pour radio cognitive (ou « sensing » en anglais), ou encore, en cas de télécommunications simultanées avec un brouillage électronique.

Néanmoins, à raison de ce que la chaîne de traitement du sous-système radio d'émission/réception ne peut opérer à un instant donné que pour les besoins d'une seule application radio logicielle, l'utilisation conjointe d'un même sous-système radio d'émission/réception par des applications radio logicielles différentes nécessite des interactions logicielles spécifiques entre les applications utilisant le même sous-système radio d'émission/réception de sorte à assurer une synchronisation qui évite tout conflit d'accès entre les applications radio logicielles et le sous-système radio d'émission/réception.

De telles modifications dans les logiciels induisent des couplages potentiellement lourds entre les applications radio logicielles, avec les impacts associés en termes de développement et intégration logicielle, et des difficultés de gestion de configuration des logiciels résultants lorsque la combinatoire des applications potentiellement couplées s'accroît.

La motivation de l'invention est de remédier aux inconvénients précités, en permettant la mise en oeuvre conjointe de plusieurs applications radio logicielles qui accèdent au même sous-système radio d'émission/réception sans que les applications ne dépendent les unes des autres, évitant de coûteuses reprises logicielles.

A cet effet, l'invention a pour objet un sous-système radio d'émission/réception de radio logicielle faisant partie d'un équipement radio logicielle, comportant une chaîne de traitement radio, réalisant pour l'émission la transformation d'un signal numérisé issu d'une application radio logicielle en un signal électromagnétique apte à être véhiculé par média radio, et réciproquement, pour la réception, la transformation d'un signal électromagnétique issu du média radio en un signal numérisé apte à être traité par une application radio logicielle, et un module de contrôle logiciel apte à piloter ladite chaîne de traitement radio en respect strict de requêtes primaires de contrôle en provenance d'une application radio logicielle dite application radio logicielle primaire.

Le sous-système radio d'émission/réception de radio logicielle est **caractérisé en ce qu'il** est apte à traiter des requêtes secondaires en provenance d'au moins une autre application radio logicielle dite application radio logicielle secondaire, indépendante de l'application radio logicielle primaire, en mettant en oeuvre des moyens de :
- réception d'au moins une requête secondaire de contrôle d'une dite application radio logicielle secondaire,
- détermination d'au moins une période d'inactivité primaire de ladite chaîne de traitement radio correspondant à la non utilisation de ladite chaîne de traitement radio selon la ou les requêtes primaires de contrôle émises par l'application radio logicielle primaire, et
- activation au moyen d'une interface de ladite chaîne de traitement radio de sorte à satisfaire, pendant une période d'inactivité primaire déterminée, au moins une requête secondaire de contrôle émise par au moins une application radio logicielle secondaire.

Avantageusement, le sous-système radio d'émission/réception de radio logicielle peut ainsi être utilisé par des applications radio logicielles totalement indépendantes les unes des autres, sans besoin de programmation spécifique pour assurer le fonctionnement conjoint de ces applications. L'application radio logicielle secondaire utilise le sous-système radio d'émission/réception de manière opportuniste, sans perturber le fonctionnement de l'application radio logicielle primaire, pendant les périodes de temps où le sous-système radio n'est pas utilisé par l'application radio logicielle primaire.

La présence ou non d'une application radio logicielle secondaire n'impacte ainsi en rien la programmation de l'application radio logicielle primaire, et une application radio logicielle secondaire peut être remplacée par une autre sans aucune programmation supplémentaire de l'application radio logicielle primaire. A l'inverse, à partir du moment où l'application radio logicielle secondaire est programmée de sorte à disposer d'un accès secondaire opportuniste, elle n'a pas besoin d'être modifiée quelle que soit l'application radio logicielle primaire effectivement utilisée. Seules les limites intrinsèques de compatibilité entre les besoins d'utilisation du sous-système radio d'émission/réception par l'application radio logicielle primaire et ceux de l'application radio logicielle secondaire limiteront les possibilités de bon fonctionnement de l'application radio logicielle secondaire.

Le sous-système radio d'émission/réception selon l'invention peut également présenter une ou plusieurs des caractéristiques ci-dessous :
- le module de contrôle logiciel est en outre apte à déterminer, pour une période d'inactivité primaire déterminée donnée, si la durée de la période d'inactivité primaire est suffisante pour satisfaire complètement une requête secondaire de contrôle reçue, et en ce que les moyens d'activation de ladite chaîne de traitement radio sont mis en oeuvre seulement en cas de détermination positive ;
- une requête primaire de contrôle comporte au moins une information signal relative au signal à émettre ou à recevoir et au moins une information temporelle relative à un instant temporel de début d'émission ou de réception ;
- une requête secondaire de contrôle comporte au moins une information signal relative au signal à émettre ou à recevoir, mais ne comporte pas d'information temporelle relative à un instant temporel de début d'émission ou de réception ;
- ladite information signal comprend une information de fréquence du signal à émettre ou à recevoir et une information de nombre d'échantillons numériques de signal à émettre ou à recevoir ;
- il comporte des moyens de mémorisation d'une requête secondaire de contrôle en attente ;
- il comporte des moyens de réception et de mémorisation de plusieurs requêtes secondaires de contrôle provenant chacune d'une application radio logicielle secondaire différente, et en ce que le module de contrôle logiciel comporte des moyens de sélection de requêtes secondaires de contrôle à traiter selon un ordre prédéterminé.

Selon un autre aspect, l'invention a pour objet un équipement radio logicielle comprenant un sous-système radio d'émission/réception de radio logicielle tel que brièvement décrit ci-dessus, une application radio logicielle primaire et une application radio logicielle secondaire aptes à s'interfacer avec le sous-système radio d'émission/réception, **caractérisé en ce que** l'application radio logicielle primaire est une application de télécommunications et en ce que l'application radio logicielle secondaire est une application de radio cognitive.

D'autres caractéristiques et avantages de l'invention ressortiront de la description qui en est donnée ci-dessous, à titre indicatif et nullement limitatif, en référence aux figures annexées, parmi lesquelles :
- la figure 1 est une vue schématique des parties d'un équipement radio logicielle mises en oeuvre selon l'invention ;
- la figure 2 est un exemple de mise en oeuvre d'échanges entre une application radio logicielle primaire, une application radio logicielle secondaire et un sous-système radio d'émission/réception selon l'invention, et
- la figure 3 est un logigramme des principales étapes d'un programme logiciel apte à mettre en oeuvre l'invention.

L'invention porte sur la mise en oeuvre simultanée de deux applications radio logicielles, typiquement une application primaire de radiocommunications qui est traitée de manière prioritaire, et une application secondaire.

L'invention trouve des applications dans le domaine civil, l'application primaire étant une application de télécommunications, par exemple selon le standard GSM, et l'application secondaire étant une application de radio cognitive, qui consiste par exemple en l'analyse de l'environnement spectral de l'équipement radio.

Alternativement, l'invention trouve des applications dans le domaine militaire, avec une application primaire de télécommunications par forme d'onde, et une application secondaire de type sensing pour radio cognitive ou de type guerre électronique (émission de brouillage, mesures de leurrage ou d'intrusion).

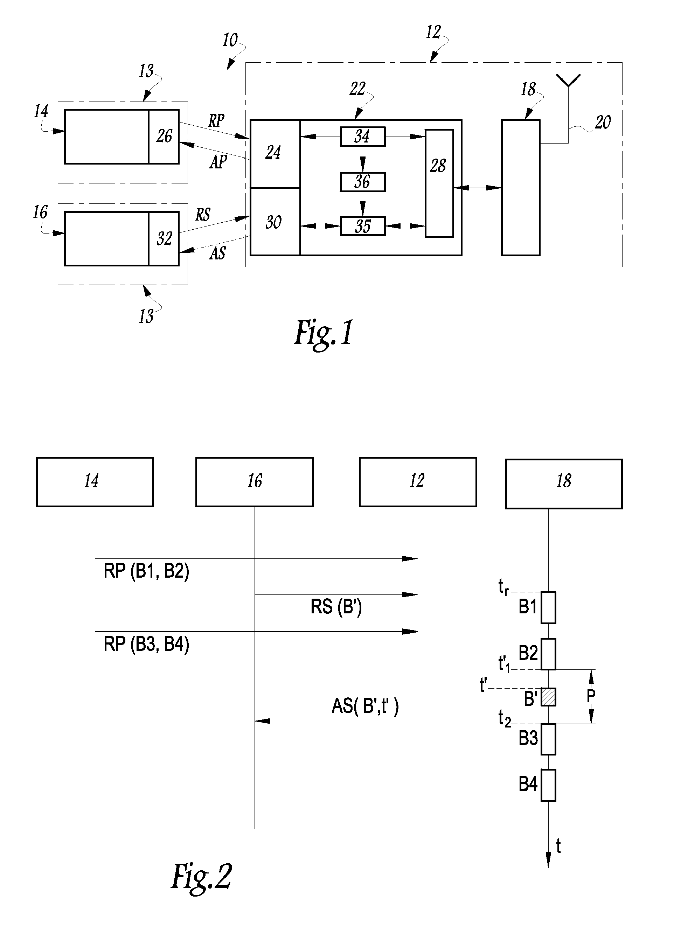

L'équipement radio 10 selon l'invention, représenté à la figure 1, comprend un sous-système radio d'émission/réception de radio logicielle 12, ou «transceiver SDR » selon la terminologie anglo-saxonne, un ou plusieurs calculateurs 13 mettant en oeuvre une application radio logicielle primaire 14, appelée ci-après application primaire, et une application radio logicielle secondaire 16, appelée ci-après application secondaire.

Le sous-système radio d'émission/réception 12 de radio logicielle comporte une chaîne de traitement radio de signal 18 connectée au média radio 20 par le biais d'une antenne, dernier étage de la chaîne de traitement, et un module de contrôle logiciel 22, sous forme de programmes d'ordinateur mis en oeuvre par un processeur de traitement numérique. La chaîne de traitement radio 18 comporte, pour la réception, une partie de traitements analogiques et une partie de traitements numériques séparés par un étage de conversion analogique-numérique, et, pour l'émission, une partie de traitements numériques et une partie de traitements analogiques séparés par un étage de conversion numérique-analogique. La chaîne de traitement radio 18 réalise en émission la transformation d'un signal numérisé issu d'une application radio logicielle en un signal électromagnétique apte à être véhiculé par média radio, et, en réception, la transformation d'un signal électromagnétique reçu via le média radio en un signal numérisé apte à être traité par une application radio logicielle.

En particulier, le module de contrôle logiciel 22 comprend des moyens d'interface logicielle 24 avec l'interface de programmation 26 de l'application primaire 14. Ainsi l'application primaire 14 est apte échanger des requêtes primaires (RP, AP) avec le sous-système radio 12, comprenant des requêtes primaires de contrôle et des requêtes primaires de données. Alors que les requêtes primaires de contrôle véhiculent des informations depuis l'application radio logicielle 14 vers le sous-système radio 12, les flux d'information associés aux requêtes primaires de données vont de l'application radio logicielle 14 vers le sous-système radio pour l'émission, et inversement pour la réception.

Typiquement, l'application primaire 14 envoie via l'interface 26 des requêtes primaires de contrôle temps réel, de type 'RP()=CreateRxBurst()' ou 'RP()=CreateTxBurst()' pour demander la réception ou la transmission d'un paquet d'échantillons d'un signal radio pendant un « burst » qui s'étend sur une période de temps précisément déterminée et pendant lequel le sous-système radio 12 doit opérer une transformation de signal précise.

Les requêtes primaires de contrôle fournissent une information signal comprenant toute information utile à la bonne configuration de transformation de signal que doit opérer la chaîne de traitement radio 18 du sous-système radio d'émission/réception 12, ou « tuning profile ». Par exemple, le « tuning profile » comporte la fréquence de fonctionnement radio, la largeur de bande du signal à recevoir ou à émettre, ou encore la fréquence d'échantillonnage du signal bande de base échangé entre l'application radio logicielle 14 et le sous-système radio d'émission/réception 12.

Les requêtes primaires de contrôle assurent également la maîtrise par l'application radio logicielle 14 de la caractérisation temporelle du burst, en fournissant l'intégralité des informations temporelles ou « timing profile » correspondant. Il s'agit plus spécifiquement de définir la longueur de burst, typiquement exprimée en nombre d'échantillons numériques de signal ou en durée de signal analogique correspondant, et l'instant temporel de début d'émission ou de réception, potentiellement fourni à une précision inférieure à la durée d'un échantillon de signal bande de base échangé entre l'application radio logicielle 14 et le sous-système radio d'émission/réception 12.

Le sous-système radio d'émission/réception de radio logicielle 12 opère en stricte conformité des instructions temporelles (« timing profile ») et de traitement de signal (« tuning profile ») telles que fournies par l'application primaire 14 via les requêtes primaires de contrôle. Les requêtes primaires de contrôle sont traitées par le module de contrôle 34, qui s'appuie sur une interface 28 d'activation de la chaîne de traitement radio 18 pour la configurer et l'activer conformément aux besoins de l'application primaire.

Pendant la réception d'un burst le sous-système radio d'émission/réception 12 renvoie les série d'échantillons reçus via une ou plusieurs requêtes primaires de données de type 'AP=PushRxBBSamples()'. L'échange de données peut également s'effectuer échantillon par échantillon, de façon continue selon les techniques de transmission continue ou streaming, connues de l'homme du métier.

Pendant l'émission d'un burst, c'est l'application radio logicielle 14 qui envoie au sous-système radio d'émission/réception 12 les d'échantillons à émettre à via une ou plusieurs requêtes primaires comprenant des données du type 'RP=PushTxBBSamples()'. De même qu'en réception, l'échange de données peut s'effectuer échantillon par échantillon, en streaming.

L'ensemble des précisions fournies ci-dessus correspond à la configuration impliquant une application radio logicielle et son sous-système radio logicielle d'émission/réception dans le cas d'un poste radio logicielle exécutant une seule application radio logicielle sur la voie radio considérée.

Dans le contexte de l'invention, où une utilisation opportuniste secondaire du sous-système radio d'émission/réception est considérée, les interactions entre l'application radio logicielle secondaire et le sous-système radio procèdent des mécanismes décrits ci-après, qui ne correspondent pas à une simple duplication des interfaces de contrôle primaire.

Le module de contrôle logiciel 22 du sous-système radio d'émission/réception comprend en plus des interfaces pour les requêtes primaires de contrôle et de données, des moyens 30 d'interface logicielle avec une interface de programmation 32 de l'application secondaire 16.

A l'image des moyens précédemment exposés dont dispose l'application primaire 14, l'application secondaire 16 a la possibilité d'échanger des requêtes secondaires de contrôle et de données avec le sous-système radio d'émission/réception 12. En particulier, l'application secondaire 16 échange des requêtes secondaires de contrôle RS avec la partie 30 du module de contrôle logiciel 22 via l'interface 32, et reçoit des réponses correspondantes AS en provenance de l'interface 30.

La différence avec les requêtes primaires est que les requêtes secondaires de contrôle ne spécifient, pour un accès opportuniste secondaire, aucune information temporelle de début d'émission/réception, seulement des informations relatives à la durée souhaitée des bursts, laissant au module de contrôle 22 la responsabilité de décider de l'activation de bursts secondaires conformément aux informations de vacances d'utilisation par l'application radio logicielle primaire.

A cet effet, le module de contrôle logiciel 22 comprend des moyens de contrôle 34 aptes à commander la chaîne de traitement radio 18, via l'interface d'activation 28, selon les requêtes primaires et des moyens 35 d'activation de la chaîne de traitement radio 18, via l'interface d'activation 28, selon les requêtes secondaires, exploitant un moyen 36 de détermination de périodes d'inactivité primaire P de la chaîne de traitement radio 18 par rapport à son utilisation par l'application primaire mise en oeuvre par les moyens 34.

Par exemple, une requête secondaire, de type 'RS=requestRxSecondaryBurst()' en réception ou 'RS=requestTxSecondaryBurst()' en émission, envoyée via l'interface 32 de l'application secondaire, contient des informations sur la nature du traitement de signal à opérer (information de « tuning ») analogues à celles qu'aurait transmis l'application primaire, des informations sur la durée de burst souhaitée, mais aucune information sur l'instant voulu de début de fonctionnement de la chaîne de traitement radio 18.

Contrairement aux requêtes primaires de contrôle, qui ont valeur de commande de la chaîne de traitement radio 18, les requêtes secondaires de contrôle sont à satisfaire quand l'utilisation de la chaîne de traitement radio 18 par l'application primaire 14 laisse des plages vacantes permettant la satisfaction des besoins exprimés par l'application radio logicielle secondaire 16.

Des requêtes et réponses secondaires d'échange de données en tout point analogues aux requêtes et réponses primaires d'échange de données sont également échangées entre l'application secondaire 16 et le sous-système radio d'émission/réception 12.

Après détermination d'une période d'inactivité primaire suffisante du sous-système radio d'émission/réception pour la mise en oeuvre de la requête secondaire, les moyens 28 d'activation de la chaîne de traitement radio 18 sont mis en oeuvre par les moyens 35 pour émettre/recevoir un signal selon la requête secondaire, créant ainsi un burst secondaire intercalé entre les bursts primaires.

L'instant temporel de mise en oeuvre de la requête secondaire et la taille du paquet d'échantillons traité sont notifiés par le module de contrôle logiciel 22 à l'application secondaire 16 via les interfaces 30 et 32, par exemple via un message 'notifyRxSecondaryTiming()' en réception, ou 'notifyTxSecondaryTiming()' en émission. La notification de l'instant temporel de mise en oeuvre de la requête secondaire peut se faire selon différents formats. Par exemple elle peut être datée dans une heure également accessible par l'application radio secondaire, ou relativement à un évènement connu de l'application radio logicielle secondaire.

Pour une requête secondaire de réception, les échantillons reçus sont envoyés à l'application secondaire via des messages de type 'pushRx2ndBasebandSamples()', avec possibilité d'envoi en continu échantillon par échantillon, selon les techniques de streaming mentionnées ci-dessus.

De même, en émission, les échantillons transmis sont envoyés par l'application secondaire via des messages de type 'pushTx2ndBasebandSamples()', avec possibilité d'envoi en continu échantillon par échantillon, selon les techniques de streaming.

Un exemple de plage d'inactivité primaire se présente dans une des applications de l'invention, lorsque des postes émetteurs/récepteurs mobiles émettent régulièrement un motif de synchronisation, une plage étant inutilisée dans la structure temporelle du protocole radio pour permettre les opérations de synchronisation en prenant en compte les variations de temps de propagation du signal entre deux postes. Lorsque le récepteur est proche physiquement de l'émetteur, la réception du motif de synchronisation se conclut dans la première partie de la plage temporelle de synchronisation allouée, ce qui laisse du temps disponible correspondant à une plage d'inactivité primaire sur le restant de la plage de synchronisation.

La figure 2 illustre un exemple d'utilisation simple du radio d'émission/réception selon l'invention. La figure 2 montre en parallèle des messages (requêtes et réponses) échangés par les applications primaire et secondaire et leur traitement dans le temps par la chaîne de traitement radio ou interface radio 18.

L'application primaire 14 envoie au sous-système radio d'émission/réception 12 ou « transceiver » d'abord une requête primaire de contrôle RP(B1,B2), puis une requête primaire de données, concernant la transmission des paquets d'échantillons ou bursts B1, B2, chacun comportant par exemple 1024 échantillons numériques d'un signal, à partir d'un instant t₁ dans le temps.

Une requête secondaire de contrôle RS(B') de l'application secondaire 16, par exemple dans le cas d'une application secondaire de radio cognitive, concernant la réception ou acquisition d'un paquet B' d'échantillons numériques d'un signal de fréquence donnée, par exemple de 128 échantillons, est ensuite envoyée au sous-système radio d'émission/réception 12 après l'instant t₁.

Enfin une deuxième requête primaire de contrôle RP(B3,B4) contrôle, suivie d'une requête primaire de données, pour la transmission des paquets d'échantillons ou bursts B3, B4, chacun comportant par exemple 1024 échantillons numériques d'un signal, à partir d'un instant t₂ dans le temps est envoyée au sous-système radio d'émission/réception.

Le sous-système radio d'émission/réception 12 pilote la chaîne de traitement 18 via l'interface d'activation 28 pour répondre aux requêtes primaires de contrôle.

De plus, le sous-système radio d'émission/réception 12, mettant en oeuvre les moyens 36 de détermination d'une période d'inactivité primaire, détermine, en fonction de l'instant t₁ et de la durée d'émission des paquets B1 et B2, que l'émission se termine à l'instant temporel t'₁. Or la deuxième requête primaire commence à l'instant temporel t2, donc la période P comprise entre t'₁ et t₂ est une période d'inactivité de la chaîne de traitement radio 18 au vu des requêtes primaires.

Le sous-système radio d'émission/réception 12 pilote la chaîne de traitement 18 pour la mise en oeuvre de la requête secondaire RS(B') pendant la période d'inactivité primaire P, après avoir vérifié que la durée de la période d'inactivité primaire est suffisante pour l'acquisition d'un paquet B' de 128 échantillons. Le paquet d'échantillons acquis B', ainsi que l'instant temporel de réception t', sont transmis en réponse AS(B', t') à l'application secondaire 16.

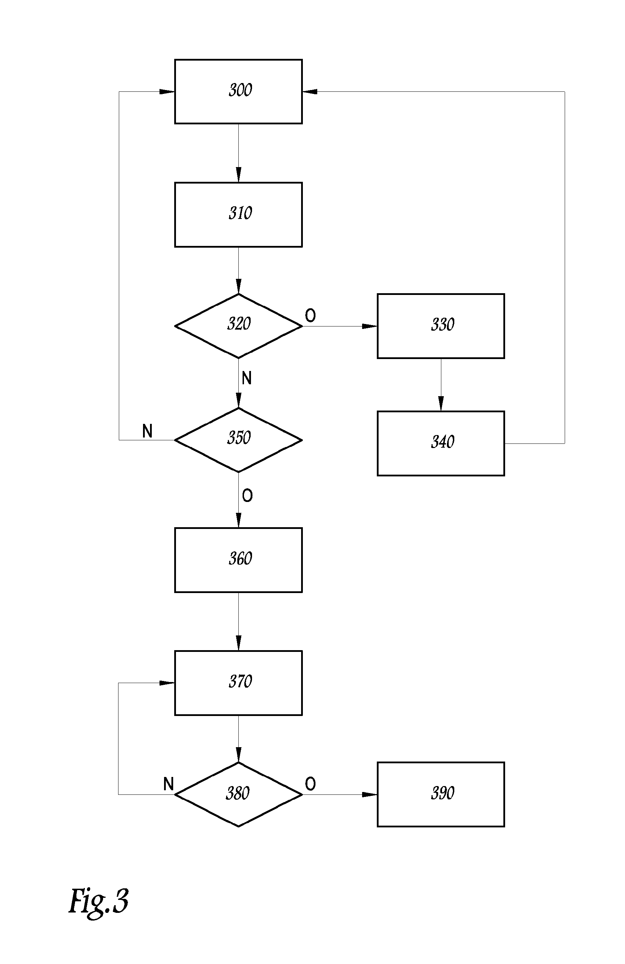

L'organigramme de la figure 3 illustre les principales étapes mises en oeuvre par un module de contrôle logiciel 22 d'un sous-système radio d'émission/réception 12 mettant en oeuvre l'invention.

Une étape 300 d'attente de requête provenant d'une application radio logicielle est mise en oeuvre par le module de contrôle logiciel 22.

Lors de la réception d'une requête à l'étape 310, il est vérifié s'il s'agit d'une requête primaire de contrôle RP à l'étape 320. La distinction entre requêtes primaires et secondaires de contrôle se fait par exemple selon la formulation de la requête. En effet, comme expliqué ci-dessus, une interface de programmation 24 est dédiée aux requêtes primaires, qui sont différentes des requêtes secondaires, spécifiées dans l'interface de programmation 30.

En cas de réponse positive, l'étape 320 est suivie de l'étape 330 de mise à disposition des moyens d'activation 28 des paramètres spécifiés dans la requête primaire de contrôle RP, en vue du pilotage de la chaîne de traitement radio 18 selon ces paramètres, à un instant qui peut être ultérieur à l'instant d'exécution de l'étape 330.

Ensuite, à une étape 340, les informations temporelles d'utilisation de la chaîne de traitement extraites de la requête primaire de contrôle RP sont stockées en mémoire.

Dans un mode de mise en oeuvre, la requête primaire de contrôle RP spécifie un instant de début tₛ d'émission ou de réception du burst primaire et une durée de burst primaire, qui permet de déduire l'instant de fin d'utilisation de la chaîne de traitement radio 18. Les instants de début et de fin d'utilisation de la chaîne de traitement radio sont mémorisés.

Dans un premier cas de figure, l'instant tₛ de début d'émission ou de réception du burst est confondu avec le début d'utilisation de la chaîne de traitement radio 18. Le calcul d'un instant de fin d'utilisation de la chaîne de traitement radio 18, connaissant la durée d'un burst, est alors trivialement déduit.

Dans un deuxième cas de figure, la chaîne de traitement radio 18 démarre plus tôt que l'instant tₛ spécifié, pour tenir compte des latences dans la chaîne de traitement. Le décalage de l'instant de démarrage de la chaîne de traitement radio 18 est alors pris en compte dans le calcul de l'instant de fin d'utilisation de la chaîne de traitement radio 18.

L'étape 340 est suivie par un retour à l'étape 300 d'attente d'une nouvelle requête.

Dans le cas d'une réponse négative au test 320, il est vérifié à l'étape 350 s'il s'agit d'une requête secondaire, donc en provenance d'une application radio logicielle préalablement enregistrée comme application radio logicielle secondaire. En cas de réponse négative, l'étape 350 est suivie par un retour à l'étape 300 d'attente de nouvelle requête.

Dans le cas d'une réponse positive au test 350, la requête secondaire est mémorisée et mise en attente à l'étape 360.

L'étape 360 est suivie de l'étape 370 de détermination d'une période d'inactivité primaire de la chaîne de traitement radio 18, en utilisant les informations de début et de fin d'utilisation stockées préalablement.

Dans un mode de réalisation, l'étape 370 et suivantes sont mises en oeuvre par une seconde tâche de programmation (« thread » en anglais), différente de la première tâche de programmation mettant en oeuvre les étapes 300 à 350, de manière ne pas empiéter sur le traitement prioritaire de requêtes primaires. Ces tâches de programmation partagent un espace mémoire dans lequel la première tâche de programmation stocke les informations d'utilisation de la chaîne de traitement radio 18, et empile les requêtes secondaires de contrôle à effectuer, et, si besoin, les requêtes secondaires de données correspondantes, et la deuxième tâche de programmation lit des informations dans cet espace mémoire.

Ainsi, si deux périodes d'utilisation par l'application primaire (tₛ,tₑ) et (tₛ', tₑ') ont été mémorisée, la période comprise entre tₑ et tₛ' est une période d'inactivité primaire. Bien évidemment, l'instant tₑ se situe dans le futur par rapport à l'instant de mise en oeuvre (instant courant t_{c}), de manière à pouvoir prévoir un traitement commençant à partir de l'instant tₑ. De préférence, la période d'inactivité primaire déterminée est la période la plus proche dans le futur de l'instant courant.

Il est ensuite vérifié à l'étape 380 si le traitement de signal requis par la requête secondaire est réalisable pendant la période temporelle P=[tₑ, tₛ'], par exemple en vérifiant si le nombre d'échantillons demandé peut être reçu ou émis dans la période temporelle P, connaissant le nombre d'échantillons que la chaîne de traitement radio 18 est capable de traiter, en émission ou en réception, par unité de temps.

En cas de réponse positive à l'issue de l'étape 380, donc si la requête secondaire peut être satisfaite, une commande de pilotage de la chaîne de traitement, comprenant les informations signal de la requête secondaire et les instants temporels de début et de fin de la période d'inactivité primaire déterminée, est envoyé à l'étape 390. La requête secondaire est alors effacée de la pile de requêtes secondaires mises en attente.

L'étape 390 est suivie de l'étape d'attente de nouvelle requête 300 préalablement décrite.

En cas de réponse négative, l'étape 380 est suivie de l'attente d'une nouvelle détermination de période d'inactivité primaire du module radio (étape 370).

L'invention a été décrite ci-dessus avec une application primaire et une application secondaire.

En variante, la mise en oeuvre simultanée de plusieurs applications secondaires est envisagée. Chaque application secondaire s'enregistre auprès du sous-système radio d'émission/réception, de manière à ce que le sous-système radio d'émission/réception reconnaisse la provenance de chacune des requêtes secondaires et envoie des réponses adéquates aux applications secondaires. Lorsque le sous-système radio d'émission/réception reçoit plusieurs requêtes secondaires, un ordre de traitement est appliqué pour répondre à ces requêtes selon les périodes d'inactivité primaire de la chaîne de traitement en réponse aux requêtes primaires, comme expliqué ci-dessus.

Selon une première variante, l'ordre de traitement est simplement l'ordre d'arrivée des requêtes secondaires, selon un ordre classique premier arrivé, premier servi.

Selon une deuxième variante, le module logiciel comporte en plus des moyens d'évaluation du temps nécessaire pour la chaîne de traitement pour traiter chacune des requêtes secondaires, et des moyens d'appliquer un ordre de traitement correspondant, par exemple l'ordre croissant de temps nécessaire pour le traitement.

Ainsi, le sous-système radio d'émission/réception de radio logicielle proposé est apte à opérer selon des requêtes hiérarchisées d'un nombre quelconque d'applications indépendantes utilisant simultanément ce sous-système radio d'émission/réception. Le sous-système radio d'émission/réception de radio logicielle proposé est flexible, peu coûteux et aisé à maintenir.

## Revendications

1. Sous-système radio d'émission/réception (12) de radio logicielle faisant partie d'un équipement radio logicielle (10), comportant une chaîne de traitement radio (18), réalisant pour l'émission la transformation d'un signal numérisé issu d'une application radio logicielle en un signal électromagnétique apte à être véhiculé par média radio, et réciproquement, pour la réception, la transformation d'un signal électromagnétique issu du média radio en un signal numérisé apte à être traité par une application radio logicielle, et un module de contrôle logiciel (22) apte à piloter ladite chaîne de traitement radio (18) en respect strict de requêtes primaires de contrôle (RP) en provenance d'une application radio logicielle dite application radio logicielle primaire (14),
le sous-système radio (12) d'émission/réception de radio logicielle étant **caractérisé en ce qu'il** est apte à traiter des requêtes secondaires en provenance d'au moins une autre application radio logicielle (16) dite application radio logicielle secondaire, indépendante de l'application radio logicielle primaire (14), en mettant en oeuvre des moyens de :
- réception (30) d'au moins une requête secondaire de contrôle (RS) d'une dite application radio logicielle secondaire (16),
- détermination (36) d'au moins une période d'inactivité primaire (P) de ladite chaîne de traitement radio (18) correspondant à la non utilisation de ladite chaîne de traitement radio selon la ou les requêtes primaires de contrôle (RP) émises par l'application radio logicielle primaire (14), et
- activation (35) au moyen d'une interface (28) de ladite chaîne de traitement radio (18) de sorte à satisfaire, pendant une période d'inactivité primaire (P) déterminée, au moins une requête secondaire de contrôle (RP) émise par au moins une application radio logicielle secondaire (16).

2. Sous-système radio d'émission/réception de radio logicielle selon la revendication 1, **caractérisé en ce que** le module de contrôle logiciel (22) est en outre apte à déterminer, pour une période d'inactivité primaire (P) déterminée donnée, si la durée de la période d'inactivité primaire (P) est suffisante pour satisfaire complètement une requête secondaire de contrôle reçue, et **en ce que** les moyens d'activation (35) de ladite chaîne de traitement radio (18) sont mis en oeuvre seulement en cas de détermination positive.

3. Sous-système radio d'émission/réception de radio logicielle selon l'une quelconque des revendications 1 ou 2, **caractérisé en ce qu'**une requête primaire de contrôle comporte au moins une information signal relative au signal à émettre ou à recevoir et au moins une information temporelle relative à un instant temporel (tₛ) de début d'émission ou de réception.

4. Sous-système radio d'émission/réception de radio logicielle selon l'une quelconque des revendications 1 à 3, **caractérisé en ce qu'**une requête secondaire de contrôle comporte au moins une information signal relative au signal à émettre ou à recevoir, mais ne comporte pas d'information temporelle relative à un instant temporel de début d'émission ou de réception.

5. Sous-système radio d'émission/réception de radio logicielle selon l'une des revendications 3 ou 4, **caractérisé en ce que** ladite information signal comprend une information de fréquence du signal à émettre ou à recevoir et une information de nombre d'échantillons numériques de signal à émettre ou à recevoir.

6. Sous-système radio d'émission/réception de radio logicielle selon l'une quelconque des revendications 1 à 5, **caractérisé en ce qu'il** comporte des moyens de mémorisation d'une requête secondaire de contrôle en attente.

7. Sous-système radio d'émission/réception de radio logicielle selon l'une quelconque des revendications 1 à 5, **caractérisé en ce qu'il** comporte des moyens de réception (30) et de mémorisation de plusieurs requêtes secondaires de contrôle provenant chacune d'une application radio logicielle secondaire différente, et **en ce que** le module de contrôle logiciel (22) comporte des moyens de sélection de requêtes secondaires de contrôle à traiter selon un ordre prédéterminé.

8. Equipement radio logicielle (10) comprenant un sous-système radio d'émission/réception (12) de radio logicielle selon l'une quelconque des revendications 1 à 7, une application radio logicielle primaire (14) et une application radio logicielle secondaire (16) aptes à s'interfacer avec le sous-système radio d'émission/réception, **caractérisé en ce que** l'application radio logicielle primaire (14) est une application de télécommunications et **en ce que** l'application radio logicielle secondaire (16) est une application de radio cognitive.
